# EUROPÄISCHE PATENTSCHRIFT

(11) **EP 1 077 169 B1**
(45) Veröffentlichungstag und Bekanntmachung des Hinweises auf die Patenterteilung: **27.07.2005**
(21) Anmeldenummer: 00117466.3
(22) Anmeldetag: 11.08.2000
(51) Int. Cl.: B62B 3/06, B62B 5/00

(54) **Flurförderzeug mit Lastrollen**
Industrial truck with supporting wheels
Chariot de manutention comprenant des roues de support

(30) Priorität: 19.08.1999 DE 19939295
(43) Veröffentlichungstag der Anmeldung: 21.02.2001
(73) Patentinhaber: STILL S.A.R.L., 77100 Meaux (FR)
(72) Erfinder: Streiff, Patrick, 60290 Laigneville (FR)
(74) Vertreter: Kasseckert, Rainer

(56) Entgegenhaltungen:
- GB-A- 832 315
- US-A- 841 651
- US-A- 2 450 062
- US-A- 4 025 099
- US-A- 5 170 528
- US-A- 5 735 560
- PATENT ABSTRACTS OF JAPAN vol. 1996, no. 10, 31. Oktober 1996 (1996-10-31) & JP 08 157192 A (OHBAYASHI CORP;SANOYAS HISHINO MEISHO CORP), 18. Juni 1996 (1996-06-18)

## Beschreibung

Die Erfindung betrifft ein Flurförderzeug, insbesondere Palettenhubwagen, mit mindestens einem im Bereich einer Lastaufnahmevorrichtung tandemartig angeordneten Lastrollenpaar.

Bei Flurförderzeugen der genannten Art sind, wie beispielsweise in der J P 08157192 A mit den Merkmalen des Oberbegriffs des ersten Anspruchs gezeigt, unterhalb der häufig als Lastgabel ausgeführten Lastaufnahmevorrichtung in der Regel zwei tandemartige Lastrollenpaare angeordnet, mit welchen das Lastgewicht auf der Fahrbahn abgestützt wird. Die beiden Lastrollen eines Tandems sind an einem gemeinsamen Bauteil befestigt, welches gegenüber dem Lastaufnahmemittel des Flurförderzeugs drehbar gelagert ist. Die Drehachse dieses Bauteils ist hierbei mittig zwischen den Lastrollen angeordnet. Bei Niederhubwagen oder Niederhubkommissionierern sind die Lastrollen direkt oder indirekt an dem Lastaufnahmemittel befestigt. Hochhubwagen hingegen weisen zur Befestigung der Lastrollen Radarme auf, die unterhalb des Lastaufnahmemittels angeordnet sind.

Bei Flurförderzeugen mit einer sogenannten Initialhubvorrichtung können das Lastaufnahmemittel und gegebenenfalls die Radarme geringfügig gegenüber den Lastrollen angehoben werden, womit die Bodenfreiheit im Bereich des Lastaufnahmemittels erhöht werden kann.

Bei gattungsgemäßen Flurförderzeugen ist der maximale Durchmesser der Lastrollen dadurch begrenzt, daß ein Einfahren des abgesenkten Lastaufnahmemittels in eine Palette ermöglicht werden muß. Mit den aus diesem Grund üblicherweise verwendeten Lastrollen geringen Durchmessers können daher auf dem Boden liegende Hindernisse, z.B. Steine, Holzstücke oder Metallspäne, häufig nicht problemlos überfahren werden. Stattdessen besteht die Gefahr, daß derartige Hindernisse zwischen der Fahrbahn und der Lastrolle eingeklemmt werden, was häufig zu einer Beschädigung der Lastrolle führt. Gleichzeitig ist es jedoch häufig notwendig, mit dem Lastaufnahmemittel in eine querstehende Palette einzufahren, wobei ein Hindernis in Form eines Bodenbretts der Palette mit den Lastrollen überfahren werden muß.

Der Erfindung liegt daher die Aufgabe zugrunde, ein Flurförderzeug der eingangs genannten Art zur Verfügung zu stellen, bei dem eine Beschädigung der Lastrollen durch auf dem Boden liegende Hindernisse vermieden und das einfache Einfahren in querstehende Paletten ermöglicht wird.

Diese Aufgabe wird erfindungsgemäß dadurch gelöst, daß mindestens ein Abweiser in Bodennähe vor einer Lastrolle angeordnet ist, welcher um eine Drehachse drehbar gelagert ist und durch Drehen um 180 Grad von einer bodennahen Position in eine vom Boden beabstandete Position bewegbar ist. Die Unterkante des Abweisers ist ca. 5 bis 15 Millimeter von der Fahrbahn beabstandet. Ein Aufsetzen des Abweisers kann hierdurch auch bei unebener Fahrbahn weitgehend vermieden werden. Auf dem Boden liegende Hindernisse werden von dem Abweiser weggeschoben und gelangen somit nicht unter die Lastrolle. In horizontaler Richtung weist der Abweiser einen Mindestabstand von ca. 2 bis 10 Millimetern von der Lastrolle auf. Es ist eine wirksame und eine unwirksame Stellung vorgesehen, indem der Abweiser durch Drehen um 180 Grad von einer bodennahen Position in eine vom Boden beabstandete Position bewegbar ist. Der Abweiser wird dabei gemeinsam mit dem Lastrollenpaar um 180 Grad gedreht. Wenn sich der Abweiser in der vom Boden beabstandeten Position befindet, ist es beispielsweise möglich, mit dem Lastaufnahmemittel in eine querstehende Palette einzufahren, wobei ein Bodenbrett der Palette mit den Lastrollen überfahren werden muß.

Vorteilhaft ist es, wenn in Bodennähe vor der vorderen Lastrolle des Lastrollenpaars und hinter der hinteren Lastrolle des Lastrollenpaars jeweils ein Abweiser angeordnet ist. Sowohl bei Vorwärtsfahrt, als auch bei Rückwärtsfahrt ist hierbei jeweils ein Abweiser wirksam.

Vorteilhaft ist es weiterhin, wenn der Abweiser bezüglich einer die Drehachsen der beiden Lastrollen des Lastrollenpaars enthaltenden Ebene unsymmetrisch angeordnet ist. Der wirksame Abweiser deckt hierbei hauptsächlich die untere Hälfte der Lastrolle ab.

Zweckmäßigerweise ist der Abweiser an einem die beiden Lastrollen des Lastrollenpaars verbindenden Bauteil befestigt. Die Lastrollen und der Abweiser können somit gemeinsam gedreht werden.

Weitere Vorteile und Einzelheiten der Erfindung werden anhand des in den schematischen Figuren dargestellten Ausführungsbeispiels näher erläutert. Dabei zeigt
- Figur 1: eine Tandem-Lastrolle eines erfindungsgemäßen Flurförderzeugs in Seitenansicht,
- Figur 2: die Tandem-Lastrolle in Draufsicht.

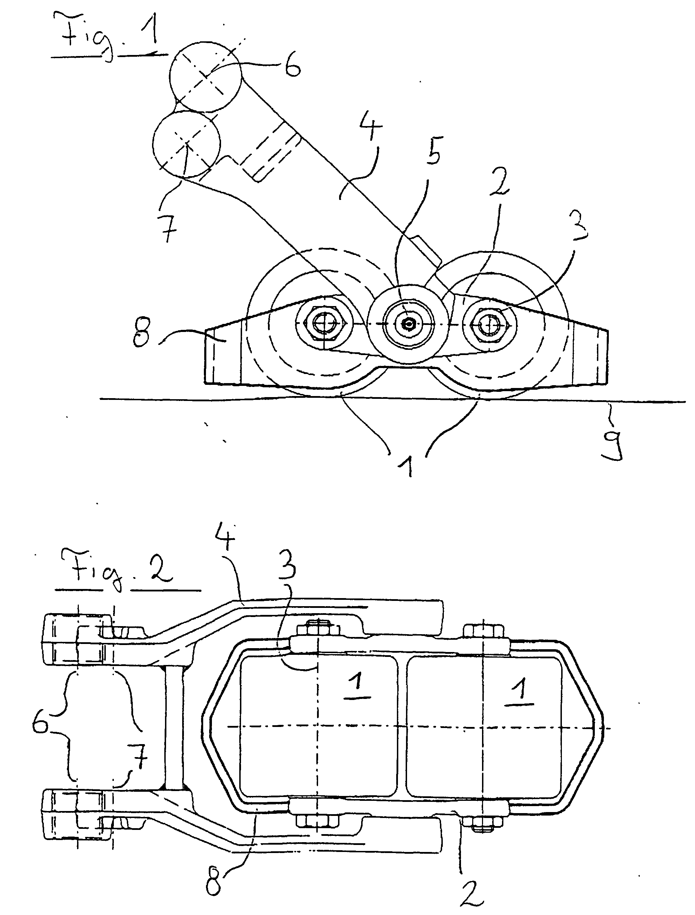

Figur 1 zeigt die tandemartig angeordneten Lastrollen 1 eines erfindungsgemäßen Flurförderzeugs in Seitenansicht. Die Lastrollen 1 sind an einem gemeinsamen Bauteil 2 drehbar um die Achsen 3 gelagert. Das Bauteil 2 wiederum ist an einem Hebelarm 4 drehbar um die Achse 5 befestigt. Der Hebelarm 4 ist schwenkbar um eine Achse 6 an einem nicht dargestellten Lastarm oder Radarm des Flurförderzeugs gelagert, wobei sich die Lastrollen 1 in der gezeigten Stellung des Hebelarms 4 größtenteils innerhalb eines nach unten offenen Hohlprofils des Lastarms bzw. Radarms befinden. Der Hebelarm kann um die Achse 6 im Uhrzeigersinn in eine aufrechte Stellung gedreht werden, wenn von einer an einer Achse 7 angreifenden, nicht dargestellten Stange eine Zugkraft ausgeübt wird. Hierbei wird der Lastarm bzw. Radarm gegenüber den Lastrollen 1 angehoben.

Erfindungsgemäß ist auf beiden Seiten des Lastrollenpaars jeweils ein Abweiser 8 angeordnet. Der aus Metall oder Kunststoff ausgeführte Abweiser 8 ist an dem Bauteil 2 im Bereich der Drehachsen 3 der Lastrollen 1 befestigt. In der gezeigten Stellung erstrecken sich die Abweiser 8, ausgehend von den Achsen 3, in seitlicher Richtung nach unten in Bodennähe. Auf dem Boden liegende Hindernisse und Kleinteile, die eine größere Höhe aufweisen, als der zwischen dem Abweiser 8 und dem Boden 9 vorhandene Spalt, werden von dem Abweiser 8 weggeschoben und gelangen somit nicht unter die Lastrollen 8. Hierdurch kann ein Blockieren und ein Beschädigen der Lastrollen 1 durch auf dem Boden liegende Hindernisse vermieden werden.

Das Bauteil 2 kann gemeinsam mit den Lastrollen 1 und den Abweisern 8 um die Achse 5 um 180 Grad gedreht werden. Nach einer solchen Drehung erstrecken sich die Abweiser 8 in seitlicher Richtung nach oben und sind damit unwirksam. Diese Stellung der Abweiser 8 wird beispielsweise dann gewählt, wenn mit dem Flurförderzeug feste Hindernisse überfahren werden müssen. Insbesondere zum Einfahren in querliegende Paletten muß der zwischen dem Abweiser 8 und dem Boden 9 vorhandene Spalt höher sein, als das zu überfahrende Brett der Palette.

Figur 2 zeigt die Anordnung gemäß Fig. 1 in Draufsicht. Zu erkennen ist hier insbesondere der geringe Abstand zwischen den Innenseiten der Abweiser 8 und den Lastrollen 1. Hierdurch wird ein Einklemmen von Gegenständen zwischen einem Abweiser 8 und der Lastrolle 1 vermieden.

## Patentansprüche

1. Flurförderzeug, insbesondere Palettenhubwagen, mit mindestens einem im Bereich einer Lastaufnahmevorrichtung tandemartig angeordneten Lastrollenpaar, **dadurch gekennzeichnet, daß** mindestens ein Abweiser (8) in Bodennähe vor einer Lastrolle (1) angeordnet ist, welcher um eine Drehachse (5) drehbar gelagert ist und durch Drehen um 180 Grad von einer bodennahen Position in eine vom Boden beabstandete Position bewegbar ist.

2. Flurförderzeug nach Anspruch 1, **dadurch gekennzeichnet, daß** in Bodennähe vor der vorderen Lastrolle (1) des Lastrollenpaars und hinter der hinteren Lastrolle (1) des Lastrollenpaars jeweils ein Abweiser (8) angeordnet ist.

3. Flurförderzeug nach Anspruch 2, **dadurch gekennzeichnet, daß** der Abweiser (8) bezüglich einer die Drehachsen (3) der beiden Lastrollen (1) des Lastrollenpaars enthaltenden Ebene unsymmetrisch angeordnet ist.

4. Flurförderzeug nach einem der Ansprüche 1 bis 3, **dadurch gekennzeichnet, daß** der Abweiser (8) an einem die beiden Lastrollen (1) des Lastrollenpaars verbindenden Bauteil (2) befestigt ist.

## Claims

1. Industrial truck, in particular pallet truck, having at least one pair of load rollers which is arranged in tandem fashion in the region of a load-receiving apparatus, **characterized in that** at least one deflector (8) is arranged near to the base in front of a load roller (1), is mounted such that it can rotate about an axis of rotation (5) and can move from a position near to the base to a position spaced apart from the base by rotating through 180 degrees.

2. Industrial truck according to Claim 1, **characterized in that** in each case one deflector (8) is arranged near to the base in front of the front load roller (1) of the pair of load rollers and behind the rear load roller (1) of the pair of load rollers.

3. Industrial truck according to Claim 2, **characterized in that** the deflector (8) is arranged asymmetrically with respect to a plane including the axes of rotation (3) of the two load rollers (1) of the pair of load rollers.

4. Industrial truck according to any of Claims 1 to 3, **characterized in that** the deflector (8) is fixed to a component (2) connecting the two load rollers (1) of the pair of load rollers.

## Revendications

1. Chariot de manutention, notamment transpalette, comprenant au moins une paire de roues de support disposées en tandem dans la région d'un dispositif de réception de charge, **caractérisé en ce qu'**au moins un déflecteur (8) est disposé à proximité du sol devant une roue de support (1), lequel est monté à rotation autour d'un axe de rotation (5) et peut être déplacé par une rotation de 180 degrés d'une position proche du sol dans une position espacée du sol.

2. Chariot de manutention selon la revendication 1, **caractérisé en ce que** l'on dispose un déflecteur respectif (8) à proximité du sol devant la roue de support avant (1) de la paire de roues de support et derrière la roue de support arrière (1) de la paire de roues de support.

3. Chariot de manutention selon la revendication 2, **caractérisé en ce que** le déflecteur (8) est disposé de manière asymétrique par rapport à un plan contenant les axes de rotation (3) des deux roues de support (1) de la paire de roues de support.

4. Chariot de manutention selon l'une quelconque des revendications 1 à 3, **caractérisé en ce que** le déflecteur (8) est fixé sur un composant (2) reliant les deux roues de support (1) de la paire de roues de support.
